# EUROPÄISCHE PATENTSCHRIFT

(11) **EP 1 331 504 B1**
(45) Veröffentlichungstag und Bekanntmachung des Hinweises auf die Patenterteilung: **28.07.2004**
(21) Anmeldenummer: 03000707.4
(22) Anmeldetag: 13.01.2003
(51) Int. Cl.: G02B 21/06

(54) **Beleuchtungseinrichtung**
Illumination module
Module d'éclairage

(30) Priorität: 29.01.2002 AT 1352002
(43) Veröffentlichungstag der Anmeldung: 30.07.2003
(73) Patentinhaber: Photonic Optische Geräte Ges.m.b.H. & Co.KG, 1160 Wien (AT)
(72) Erfinder: Feger, Dieter, Mag., 1140 Wien (AT)
(74) Vertreter: Révy von Belvárd, Peter

(56) Entgegenhaltungen:
- WO-A-98/45744
- US-A- 3 959 651
- PATENT ABSTRACTS OF JAPAN vol. 1995, no. 08, 29. September 1995 (1995-09-29) -& JP 07 134250 A (NIKON CORP), 23. Mai 1995 (1995-05-23)

## Beschreibung

Die Erfindung betrifft eine Beleuchtungseinrichtung, insbesondere ein Ringlicht, für Mikroskope, welche mit mindestens einer elektrischen Lichtquelle, wie eine Glühlampe, eine Neonlampe, eine Leuchtdiode od. dgl., ausgerüstet ist oder welcher Licht über mindestens einen Lichtleiter von einer vom Mikroskop entfernt angeordneten elektrischen Lichtquelle zugeführt wird.

Derartige bekannte Beleuchtungseinrichtungen sind direkt am Mikroskop im Bereich des Mikroskops angeordnet, um die bestmögliche Beleuchtung des zu betrachtenden Objekts sicherzustellen. Da oftmals bei unterschiedlichsten Einsatzzwecken des Mikroskops auch Objekte zu betrachten sind, die vor elektrostatischen Ladungen geschützt werden müssen, sind derartige bekannte Beleuchtungseinrichtungen mit einer elektrisch leitenden Abschirmung versehen, die an inneren Flächen des Gehäuses der Beleuchtungseinrichtung angeordnet sind und mit dem Erdpotential elektrisch leitend verbunden sind.

Der Schutz vor Ladungsübertragungen auf das zu betrachtende Objekt ist aber bei derartigen bekannten Beleuchtungseinrichtungen nicht ausreichend, da über die ungeschützte Lichtaustrittsöffnung elektrostatische Entladungen an das Objekt bzw. auch an den Beobachter stattfinden können, die bis zur Zerstörung des Objektes führen. Dies ist insbesondere bei der Überwachung von Fertigungsprozessen in der Halbleiterindustrie oder bei Manipulationen unter dem Mikroskop, etc. von sehr großem Nachteil.

Zum Schutz vor elektrostatischen Ladungsübertragungen, beispielsweise auf das Objekt, werden auch speziell beschichtete elektrische Lichtquellen, wie Neon-Leuchten, in Beleuchtungseinrichtungen eingesetzt, die aber sehr teuer sind. Es ist von Nachteil, daß dadurch die erforderliche Schutzwirkung nicht mehr gegeben ist. Auch wurde versucht, durch Besprühung der elektrischen Lichtquelle mit Anti-Statik-Sprays ausreichende Schutzwirkung zu erreichen, was aber nicht die erforderliche Langzeit-Schutzwirkung sicherstellt.

Aus der GB-A-1,286,745 ist eine ringförmige Beleuchtungseinrichtung für Mikroskope bekannt, die ein mit einer kreisrunden Öffnung versehenes Gehäuse aufweist. Dieses Gehäuse weist eine ringförmige Bohrung auf, in die eine entsprechend ringförmig gestaltete Lichtröhre eingebracht ist. Auf der Unterseite der ringförmigen Bohrung ist ein ebenfalls ringförmiges Filter vorgesehen, das zur Filterung von unerwünschten Frequenzen des von der Lichtröhre abgegeben Lichtes dient.

Bei einem Abtast-Tunnelmikroskop gemäß der JP-A-11-166 806 ist zwischen einer Probenspitze und dem Objekt eine Abschirmeinrichtung vorgesehen, wodurch sich eine Verringerung der elektrostatischen Kapazität zwischen Probenspitze und Objekt ergibt.

In der DE-C-19720947 wird ein Vorsatzfilter für selbstleuchtende Bildschirme beschrieben, das mit auf Glas aufgebrachten sehr dünnen Metallschichten das Anziehen von Staub verhindert werden kann bzw. elektrostatische Aufladungen abgeleitet werden können.

Der Erfindung liegt die Aufgabe zugrunde, die Nachteile der bekannten Beleuchtungseinrichtungen zu vermeiden und eine Beleuchtungseinrichtung zu schaffen, welche die Übertragung von elektrostatischen Ladungen so weit wie möglich vermeidet.

Dazu wird gemäß der Erfindung bei einer Beleuchtungseinrichtung der eingangs erwähnten Art vorgeschlagen, daß die Lichtaustrittsöffnung der Beleuchtungseinrichtung mit einer Einrichtung zur Abschirmung und/oder Ableitung elektrostatischer Ladung ausgerüstet ist. Durch diese erfinderische Ausbildung der Beleuchtungseinrichtung wird erreicht, daß auch die dem Objekt zugewandte und dem Objekt am nächsten liegende Fläche der Beleuchtungseinrichtung ladungsfrei ist und vom Beobachter - gegebenenfalls aus Unachtsamkeit - berührt werden darf, ohne daß eine Beschädigung des Objekts auftritt, falls auch dieses unter dem Mikroskop manipuliert wird.

In weiterer Ausgestaltung der Erfindung wird vorgeschlagen, daß die Einrichtung zur Abschirmung und/oder Ableitung elektrostatischer Ladungen als mindestens die Fläche der Lichtausaustrittsöffnung abdeckender, elektrisch leitender und lichtdurchlässiger Bauteil ausgebildet ist. Hiedurch wird eine gute Schirmung erreicht, die auch an bereits in Verwendung befindlichen Beleuchtungseinrichtungen nachträglich angebracht werden kann.

Besonders einfach und mit geringem baulichen Aufwand kann die Einrichtung zur Abschirmung und/oder Ableitung ausgebildet sein, wenn nach einem weiteren Kennzeichen der Erfindung der Bauteil als metallisches, vorzugsweise weitmaschiges, Gitter ausgebildet ist, das mit dem Erdpotential verbunden ist. Hiedurch wird auch der Lichtverlust sehr gering gehalten. Dieses Gitter kann bevorzugt eine Dimension der Gitteröffnungen von maximal 0.5 cm x 0.5 cm aufweisen, so daß ein Finger möglichst nicht hindurchgesteckt werden kann. Gleichzeitig soll es aber so weitmaschig sein, daß die Lichtverluste möglichst gering gehalten werden. Zu diesem Zweck ist es vorteilhaft, wenn die Gitteröffnungen eine Größe von wenigstens 0.5 mm x 0.5 mm aufweisen.

Nach einer weiteren bevorzugten erfindungsgemäßen Ausführungsform wird vorgeschlagen, daß der Bauteil für die Abschirmung und/oder Ableitung von Ladungen aus Glas oder transparentem Kunststoff gebildet ist, wobei das Glas oder der Kunststoff eine elektrisch leitende Schicht oder Beschichtung aufweist, die mit dem Erdpotential verbunden ist. Hiedurch wird eine gute Abschirmung und/oder Ableitung elektrostatischer Ladung erreicht, wobei die Lichtaustrittsöffnung auch mechanisch geschlossen ist, so daß beispielsweise eine Berührung der elektrischen Lichtquelle grundsätzlich in vorteilhafter Weise verhindert wird. Dazu ergibt sich der Vorteil des Schutzes der Lichtquelle gegen das Eindringen von Staub, der bei anderen Geräten oft zum allmählichen Nachlassen der Lichtleistung führt.

Zur weitestgehenden Vermeidung von Lichtverlusten wird gemäß einem weiteren Merkmal der Erfindung vorgeschlagen, daß das Glas oder der Kunststoff nur zonenweise, insbesondere gitterförmig, mit der elektrisch leitenden Schicht od. Beschichtung versehen ist. Auch diese Ausführungsform erbringt in vorteilhaft einfacher Weise einen gut wirksamen Schutz vor elektrostatischen Ladungsübertragungen auf das Objekt oder den Beobachter. Für ein solches durch eine Phototechnik oder durch Aufdampfen erzeugtes Gitter gilt hinsichtlich der Dimensionierung im wesentlichen das oben Gesagte.

Sind Lichtverluste in etwas größerem Ausmaß zulässig, so wird nach einem weiteren Merkmal der Erfindung vorgeschlagen, daß die Schicht oder Beschichtung aus für Licht mindestens teildurchlässigem elektrisch leitendem Kunststoff gebildet ist. Derartige teildurchlässige elektrisch leitende Kunststoffe sind preisgünstiger. Es kann sich dabei um konjugierte Polymere handeln (was bevorzugt ist) oder um Glas oder Kunststoff, der mit einem leitenden Füllstoff, wie Graphit, gefüllt ist.

Weitere Einzelheiten und Merkmale der Erfindung ergeben sich aus der nachfolgenden Beschreibung von in der Zeichnung schematisch dargestellten Ausführungsformen. Es zeigen:

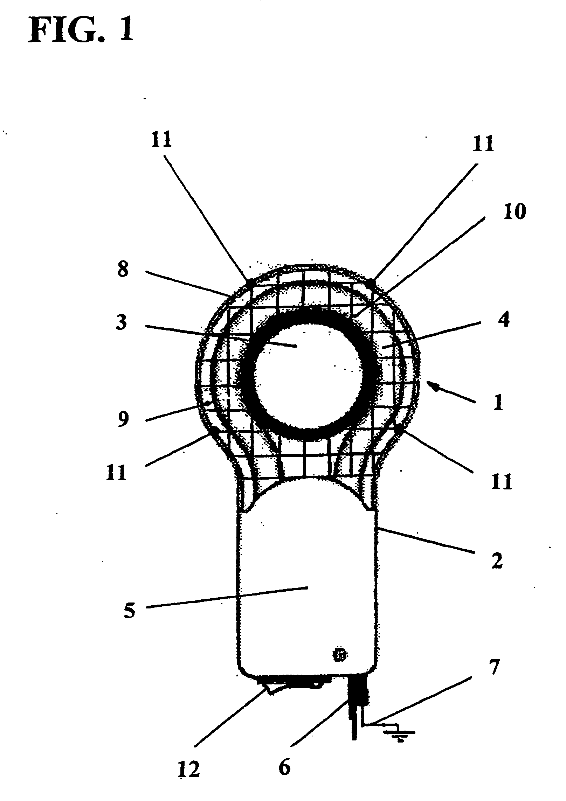

- Fig. 1: ein Ringlicht mit der Einrichtung zur Abschirmung und Ableitung elektrostatischer Ladung in Draufsicht; und
- Fig. 2: eine alternative Ausführungsform in einem perspektivisch dargestellten Längsschnitt durch die Einrichtung.

Bei dem in der Fig. dargestellten Ausführungsbeispiel ist mit 1 eine als Ringlicht ausgebildete Beleuchtungseinrichtung für ein Mikroskop bezeichnet. Diese Beleuchtungseinrichtung 1 weist ein Gehäuse 2 auf, das eine Öffnung 3 zur Montage am Mikroskop im Bereich von dessen Objektiv besitzt. Hiebei wird in nicht dargestellter Weise die Bereuchtungseinrichtung 1 am Mikroskop derart angeordnet, daß das Objektiv des Mikroskops durch die Öffnung 3 ragt, wie dies an sich bekannt ist.

Im Gehäuse 2 ist als elektrische Lichtquelle 4 eine Fluoreszenz -Leuchtstoffröhre angeordnet, die sich um die Öffnung 3 bzw. um das nicht dargestellte Objektiv des Mikroskops im wesentlichen U-förmig erstreckt. Im Bereich 5 des Gehäuses 2 ist die Halterung und elektrische Kontaktierung für die Leuchtstoffröhre vorgesehen. Die Energieversorgung für die Leuchtstoffröhre erfolgt über das elektrische Kabel 6, das auch einen elektrischen Leiter 7 zur Verbindung mit dem Erdpotential besitzt.

An der Innenwandung des Gehäuses 2 ist eine metallische Schicht 8 aufgebracht, die lichtreflektierend ist und mit dem Erdpotential über den Leiter 7 verbunden ist. Diese Schicht 8 bildet einen Reflektor für das Licht der Lichtquelle 4, um möglichst viel Licht auf das zu betrachtende, nicht dargestellte Objekt zu führen, und gleichzeitig eine Abschirmung und/oder Ableitung elektrostatischer Ladung.

Zur Vervollständigung der Schirmung und Ableitung elektrostatischer Ladung ist die zum nicht dargestellten Objekt gerichtete Lichtaustrittsöffnung 9 der Beleuchtungseinrichtung 1 mit einem aus Metall gefertigtem, weitmaschigem Gitter 10 abgedeckt, das mit dem Erdpotential über den Leiter 7 elektrisch leitend verbunden ist. Die Dimension der Gitteröffnungen ist vorzugsweise mit maximal 10 mm im Quadrat, beispielsweise 6 mm, gewählt, so daß ein Finger praktisch nicht hindurchgesteckt werden kann. Gleichzeitig soll es aber so weitmaschig sein, daß die Lichtverluste möglichst gering gehalten werden. Die Drahtdicke (und/oder Form) soll möglichst so gewählt werden, daß das Gitter selbsttragend ist, beispielsweise mit 1 bis 2 mm.

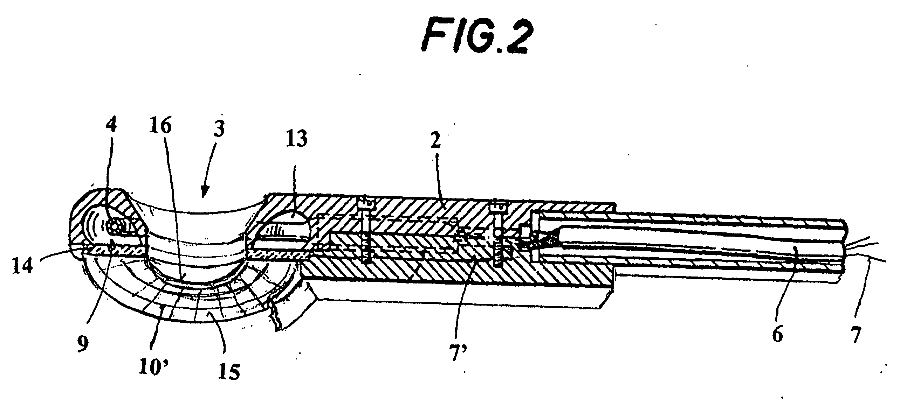

Zur lösbaren Befestigung, beispielsweise um einen Tausch der Leuchtstoffröhre einfach vornehmen zu können oder um das Gitter nachträglich auf eine existierende Bereuchtungseinrichtung aufzubringen, ist das Gitter 10 über in Bohrungen des Gehäuses 2 einpreßbare oder einschnappbare Steckstifte 11 befestigt. Ebenso ist anstelle von einer derartigen Steckstifthalterung auch eine nicht dargestellte Befestigung des Gitters 10 über Verschraubungen, über, z.B. federnde, Klammern usw. möglich. In den Bohrungen für die Steckstifte 11 bzw. für die Befestigungsschrauben ist jedenfalls eine elektrisch leitende Kontaktierung zum Erdpotential über den Leiter 7 vorgesehen. Hiebei ist eine elektrische Kontaktierung der Steckstifte 11 bzw. der Befestigungsschrauben oder anderen lösbaren Befestigungseinrichtungen mit der elektrisch leitenden Schicht 8 im Inneren der die Lichtquelle 4 aufnehmenden Höhlung des Gehäuses 2 zweckmäßig, welche Höhlung (13 in Fig. 2) über die Öffnung 9 für den Durchlaß des Lichtes der Lichtquelle 4 mit der Außenseite verbunden ist. Im dargestellten Ausführungsbeispiel sind vier Steckstifte 11 vorgesehen, doch ist klar, daß mindestens drei und gegebenenfalls mehr als vier vorgesehen sein können.

Wie schon erwähnt, ist die Dimensionierung des metallischen Gitters 10 ist derart gewählt, daß einerseits ausreichend viel Licht auf das nicht dargestellte, der Öffnung 9 gegenüberüegende (d.h. in der Praxis darunterliegende) Objekt fällt und andererseits eine ausreichende Abschirmungs- bzw. Ableitfähigkeit für elektrostatische Ladungen erreicht wird. Darüber hinaus ist die Dimensionierung der durch das Gitter 10 gebildeten Öffnungen derart gewählt, daß diese Öffnungen eine Größe aufweisen, die eine Berührung mit der elektrischen Lichtquelle 4 verhindern, also vorzugsweise maximal 10 mm, beispielswese 5 oder 6 mm. Diese Schutzmaßnahme wird darüberhinaus verstärkt, wenn das Gitter 10 in größerem Abstand von der Lichtquelle 4 angeordnet ist. Beispielsweise besitzt das Gitter 10 einen Abstand zur Lichtquelle 4 von mindestens 2 mm, vorzugsweise maximal 5 mm, beispielsweise im Bereich von 3 bis 4 mm. Hiebei kann die Dimension der Öffnungen des Gitters 10 auch größer gewählt werden, was den Lichtverlust reduziert. Eine Berührung der Lichtquelle 4 bei ungeschützter Lichtaustrittsöffnung 9 durch den Beobachter kann, wie sich bei praktischen Versuchen ergab, beispielsweise dann auftreten, wenn der Schalter 12 der Beleuchtungseinrichtung 1 betätigt wird.

Anstelle eines Gitters 10, das, wie erwähnt, vorzugsweise als steifes und selbsttragendes Drahtgitter, mit z.B. 1 bis 2 mm Drahtdurchmesser, ausgebildet ist, kann dieser als Einrichtung zur Abschirmung und Ableitung elektrostatischer Ladungen ausgebildete Bauteil auch aus Glas oder transparentem Kunststoff hergestellt sein, wie der Fig. 2 zu entnehmen ist. Diese Fig. 2 veranschaulicht, wie die erfindungsgemäße Einrichtung an einem Ringlicht nach der GB-A-1,286,745 angebracht sein kann. Die Einzelheiten dieser Konstruktion können somit der genannten GB-Schrift entnommen werden, die hier durch Bezugnahme als geoffenbart gelten soll.

Dabei ist eine Platte 14 aus Glas oder Kunststoff mit einer transparenten bzw. lichtdurchlässigen, elektrisch leitenden Schicht oder Beschichtung versehen ist, die mit dem Erdpotential über eine Verbindung 7' und den Leiter 7 verbunden ist. Hiebei kann diese Schicht oder Beschichtung auch nur zonenweise, beispielsweise linienförmig oder gitterförmig, beispielsweise in Form des Gitters 10', vorgesehen sein. Hiedurch werden etwaige Lichtverluste sehr gering gehalten.

Diese elektrisch leitende, hier das Gitter 10' bildende aufgedampfte oder über ein Photo- oder Ätzverfahren, gegebenenfalls nach Abdeckung der nicht zu beschichtenden Fläche 15 oder 16 der Platte 14 auch im Tauchverfahren oder durch Aufwalzen, gegebenenfalls aber auch in anderer Form zonenweise angebrachte Schicht oder Beschichtung kann aus elektrisch leitendem Kunststoff bestehen. Elektrische Leitfähigkeit wird bspw. bei Kunststoffen durch konjugierte Polymere erreicht, ebenso durch die Einbringung von elektrisch leitenden Füllstoffen, wie Graphit, in Glas od. Kunststoffe. Die erforderliche Schutzwirkung wird auch durch Verwendung von sehr dünnen metallischen Drähten erreicht, beispielsweise mit einem Durchmesser von 0,02 bis 0,05 mm, die auf eine, die Lichtaustrittsfläche 9 abdeckende, und damit gegen das Eindringen von Staub schützende Glasplatte od. transparente Kunststoffplatte 14 aufgebracht od. in diese eingebettet sind.

Als Lichtquelle 4 können nicht nur Leuchtstoffröhren verwendet werden, sondern auch elektrische Glühlampen, mindestens eine, aber beispielsweise ringlichtartig über die Höhlung 13 verteilte Leuchtdiode(n) od. dgl. Die elektrische Lichtquelle kann auch außerhalb bzw. entfernt von der Beleuchtungseinrichtung 1 angeordnet und das Licht über einen Lichtleiter (den in Fig. 2 ja bereits die Platte 14 bildet), wie einen Kunststoff-Lichtleiter, z.B. auch über optische Fasern, an die Beleuchtungseinrichtung 1 geführt sein und somit einen Teil der Lichtquelle bilden. Auch dann ist die oben beschriebene Einrichtung zur Abschirmung und/oder Ableitung elektrostatischer Ladung ebenso sinnvoll, da die Lichtaustrittsflächen des oder der Lichtleiter(s) ebenfalls im Bereich der Lichtaustrittsfläche bzw. -öffnung 9 angeordnet sind und berührt werden könnten.

Die Erfindung ist auf die beschriebenen Ausführungsbeispiele nicht beschränkt; beispielsweise kann es sich an Stelle eines Ringlichtes um eine Beleuchtungseinrichtung für die Beleuchtung eines bestimmten Beleuchtungsflecks handeln. Das dargestellte Gitter 10 ist hier zwar flächig ausgebildet, könnte aber auch 3-dimensional sein, etwa nach Art einer Kalotte, um die ringförmige Leuchtstoffröhre zu umfassen.

## Patentansprüche

1. Beleuchtungseinrichtung, insbesondere Ringlicht, für Mikroskope, welche mit mindestens einer elektrischen Lichtquelle, wie eine Glühlampe, eine Neonlampe, eine Leuchtdiode oder dgl. ausgerüstet ist oder welcher Licht über mindestens einen Lichtleiter von einer vom Mikroskop entfernt angeordneten elektrischen Lichtquelle zugeführt wird, **dadurch gekennzeichnet, daß** sich über die Lichtaustrittsöffnung (9) der Beleuchtungseinrichtung (1) eine Einrichtung (10; 14) zur Abschirmung und/oder Ableitung elektrostatischer Ladung erstreckt.

2. Beleuchtungseinrichtung nach Anspruch 1, wobei die Einrichtung zur Abschirmung und/oder Ableitung elektrostatischer Ladung als mindestens die Fläche der Lichtausaustrittsöffnung (9) abdeckender, elektrisch leitender und lichtdurchlässiger Bauteil (10; 14) ausgebildet ist.

3. Beleuchtungseinrichtung nach Anspruch 2, wobei der Bauteil (10; 14) als metallisches, vorzugsweise weitmaschiges Gitter, insbesondere mit einer Öffnungsweite von maximal 10 mm im Quadrat, beispielsweise mit 5 oder 6 mm, ausgebildet ist, das mit dem Erdpotential verbunden ist, und das bevorzugt selbsttragend ist.

4. Beleuchtungseinrichtung nach Anspruch 2, wobei der Bauteil (14) aus Glas oder transparentem Kunststoff gebildet ist, wobei das Glas oder der Kunststoff eine elektrisch leitende Schicht od. Beschichtung (10') aufweist, die mit dem Erdpotential verbunden ist.

5. Beleuchtungseinrichtung nach Anspruch 4, wobei das Glas oder der Kunststoff (14) nur zonenweise, insbesondere gitterförmig mit der elektrisch leitenden Schicht oder Beschichtung (10') versehen ist, die vorzugsweise wenigstens teilweise lichtdurchlässig ist.

6. Beleuchtungseinrichtung nach einem der Ansprüche 2 bis 5, wobei der Bauteil (10; 14) lösbar am Gehäuse (2) für die Lichtquelle (4) befestigt ist.

## Claims

1. Illumination module, particularly ring light, for microscopes comprising at least one electric light source, such as a bulb, a neon lamp, a light emitting diode or the like, or to which light is supplied through at least one photoconductor from an electric light source situated remotely from said microscope, **characterised in that** a device (10; 14) for shielding and/or leading away electrostatic charges extends over the light exiting opening (9) of the illumination module (1).

2. Illumination module according to claim 1, wherein said device for shielding and/or leading away electrostatic charges is formed as a light-transmissive component (10; 14) which is electrically conductive and covers at least the area of the light exiting opening (9).

3. Illumination module according to claim 2, wherein said component (10; 14) is formed as a, preferably wide-meshed, metal grid, particularly having an opening width of 10 mm in square in maximum, for example of 5 or 6 mm, which is connected to earth potential, and which preferably is self-supporting.

4. Illumination module according to claim 2, wherein said component (14) is formed of glass or transparent plastic material, the glass or transparent plastic material comprising an electrically conductive layer or coating (10') connected to earth potential.

5. Illumination module according to claim 4, wherein said glass or plastic material (14) is provided with said electrically conductive layer or coating (10'), being preferably light-transmissive at least in part, in some zone, particularly in form of a grid.

6. Illumination module according to any of claims 2 to 5, wherein said component (10; 14) is releasably mounted on a housing (2) for said light source (4).

## Revendications

1. Module d'éclairage, particulièrement éclairage circulaire, pour des microscopes, équipé d'au moins une source lumineuse électrique, comme une lampe à incandescence, une lampe lumineuse au néon, une diode ou pareil, ou auquel de la lumière est amenée d'une source lumineuse électrique, éloignée du microscope, au moyens d'au moins un guide de lumière, **caractérisé en ce qu'**un dispositif de blindage et/ou de décharge d'une charge électrostatique (10; 14) s'étend sur une ouverture de sortie de lumière (9) du module d'éclairage (1).

2. Module d'éclairage selon la revendication 1, dans lequel le dispositif de blindage et/ou de décharge d'une charge électrostatique est formé par un composant (10; 14) électro-conducteur et translucide, qui couvre au moins la superficie de l'ouverture de sortie de lumière (9).

3. Module d'éclairage selon la revendication 2, dans lequel le composant (10; 14) est formé par un grille métallique, préférablement à larges mailles, particulièrement d'un largeur d'ouverture de 10 mm en carré en maximum, par exemple de 5 ou 6 mm, qui est relié au potentiel terrestre et qu est, de préférence, portant de soi-même.

4. Module d'éclairage selon la revendication 2, dans lequel le composant (14) est formé de verre ou de matière plastique transparente, ledit verre ou ladite matière plastique comprenant une couche ou une enduction électroconducteuse (10'), qui est reliée au potentiel terrestre.

5. Module d'éclairage selon la revendication 4, dans lequel le verre ou la matière plastique (14) est pourvu de ladite couche ou enduction électroconducteuse (10'), de préférence translucide au moins partiellement, seulement par zone, en particulier en forme de grille.

6. Module d'éclairage selon une quelconque des revendications 2 à 5, dans lequel le composant (10; 14) est monté de façon détachable à un carter (2) pour la source lumineuse (4).
